# EUROPEAN PATENT APPLICATION

(11) **EP 0 609 166 A1**
(43) Date of publication of application: **03.08.1994**
(21) Application number: 94500008.1
(22) Date of filing: 25.01.1994
(51) Int. Cl.: B60B 29/00

(54) **Guides for the positioning of motor vehicle wheels**

(30) Priority: 28.01.1993 ES 9300206
(71) Applicant: Marques Beitia, Miguel, E-46017 Valencia (ES)
(72) Inventor: Marques Beitia, Miguel, E-46017 Valencia (ES)
(74) Representative: Flaccus, Rolf-Dieter, Dr.

(57) **Abstract**

They consist of elongate members (1) and (2) made with a pointed end (3), in both cases, to facilitate the passage thereof through the wheel holes, the other end having an extension of smaller cross section (4) in the case of type (1) members and a cavity which is also axial (5) in the case of type (2) members.

## Description

This invention relates to guides for the positioning of motor vehicle wheels.

In the invention, there have been devised guides for facilitating the replacement of a motor vehicle wheel with the spare wheel with ease and convenience.

It is known that when a motor vehicle wheel is punctured, the user has to replace the punctured wheel with the spare wheel. In practice, this operation which seems to be simple and consists, as is known, of lifting the vehicle with the mechanical jack, removing the punctured wheel and mounting the spare wheel involves the difficulty of positioning the three or more holes of the spare wheel with the three or more threads of the hubs and this difficulty arises because the spare wheel itself hides the holes of the hub from sight to be able to line them up and screw in.

To overcome the present problems described in the foregoing paragraph, the object of the present invention has been devised, consisting of elongate members having at one end thereof finishes allowing them to be adapted to the hub, while the opposite ends are provided with a substantially pointed configuration to facilitate the passage thereof through the wheel holes.

Depending on the type of car and, consequently, on the type of hub it has and whether it be provided with a stud or threaded hole, the guide member has been devised to have a corresponding configuration at one end thereof, i.e. adaptable to threaded hole or stud, having therefor a male or female terminal.

The guide members of the present invention facilitate, as said above, the placement of the spare wheels since they allow said wheel to be placed on the hubs directly and easily.

The guide member ensemble could comprise two units, although one alone would be sufficient to facilitate the positioning of the wheel.

To facilitate the explanation, a sheet of drawings in which one embodiment is given as an example accompanies this description.

In the drawings:

Figures 1 and 2 show the guides with the two types of hub coupling terminals.

Figure 3 shows how they work, with the guides mounted on the hub and the spare wheel lined up therewith in position to be guided thereon.

Figures 4 and 5 show the guides attached to different types of hub, with stud and threaded hole.

With reference to the Figures, there are to be seen guides, formed by elongate members, designated 1 and 2 of preferably round section, having a pointed end 3, in both cases, and an opposite end terminated with a smaller section axial extension 4, in the case of type 1 parts and an also axial cavity 5 in the case of type 2 parts.

The guide members are used as follows:

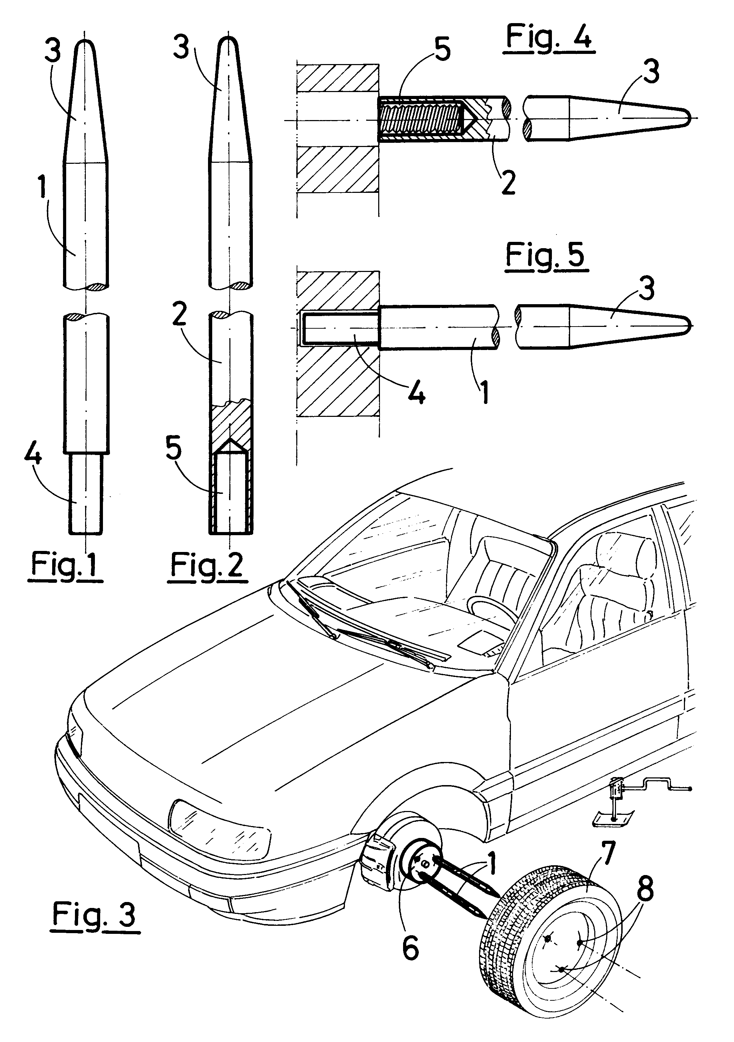

After removal of the punctured wheel, the spare wheel would be placed horizontally, i.e. on the ground facing the hub 6. The two guide members 1 or 2, as the case may be, would be inserted in two of the holes of the hub, with the guide members being in the position illustrated in Figure 3, i.e. to line the spare wheel 7 so that the guide members would slide through the holes 8 of the wheel, thereby facilitating perfect fitting of the wheel on the hub. Thereafter, the bolts would be screwed into the holes 8 remaining free and, after removal of the guide members, the remaining two bolts would be fitted.

Advantageously, the guide members will be made of a slightly flexible material, so as to correct any possible deviation there may be between the hub and the wheel.

## Claims

**1.-** Guides for the positioning of motor vehicle wheels, **characterized** essentially in that they comprise elongate round-section members made in slightly flexible material, having a pointed end in order to assist their insertion into the wheel holes, the other end being arranged for coupling to the hub fittings, said members adopting a normal position with respect to the hub, lined up with said hub fittings and with the holes of the wheel to be fixed in place.

**2.-** Guides for the positioning of motor vehicle wheels, as in claim 1, **characterized** in that the ends designed for coupling to the hub fittings comprise a coaxial length whose diameter is substantially smaller.

**3.-** Guides for the positioning of motor vehicle wheels, as in claim 1, **characterized** in that the ends designed for coupling to the hub fittings comprise an axial cavity.
